# EUROPEAN PATENT SPECIFICATION

(11) **EP 3 299 226 B1**
(45) Date of publication and mention of the grant of the patent: **23.01.2019**
(21) Application number: 17192262.8
(22) Date of filing: 21.09.2017
(51) Int. Cl.: B60R 19/56

(54) **SHOCK ABSORBING BUMPER FOR TRANSPORTATION VEHICLES**
STOSSDÄMPFENDER STOSSFÄNGER FÜR TRANSPORTFAHRZEUGE
PARE-CHOCS À ABSORPTION DE CHOCS POUR DES VÉHICULES DE TRANSPORT

(30) Priority: 21.09.2016 TR 201613178
(43) Date of publication of application: 28.03.2018
(73) Proprietor: Tirsan Treyler Sanayi Ve Ticaret Anonim Sirketi, 54580 Sakarya (TR)
(72) Inventor: KAÇAR, Batuhan Furkan, 54580 SAKARYA (TR); DERYAL, Ugur, 54580 SAKARYA (TR); KIRAÇ, Yalçin, 54580 SAKARYA (TR); ÇOLAKOGLU, Gülsüm Yesim, 54580 SAKARYA (TR)
(74) Representative: Yamankaradeniz, Kemal

(56) References cited:
- WO-A1-2016/003377
- GB-A- 2 095 630
- GB-A- 2 122 551
- US-A- 4 979 770

## Description

### Technical Field

The invention is about a newly-developed shock absorbing bumper that absorbs the energy of force of the shock and intensity of the shock caused by an impact on the rear end of a vehicle when transportation and passenger vehicles are in motion or stationary, and aims to ensure that passengers and the vehicle pull through an accident with minimum damage.

The invention is primarily about a shock absorbing bumper that prevents other vehicles from penetrating into the rear end and prevents the passengers from being injured in case of rear-end hit in the gap between the vehicle frame and carrier body in the rear of the vehicles performing goods and passenger transportation with carrier bodies called trailers and semi-trailers, and ensures that the passengers and vehicles pull through an accident with minimum damage by minimizing energy and shock generated by velocity and force of vehicles.

### Known Status of the Technique

Today, the most preferred method of transportation is road transportation. Providing a direct goods and passenger transportation possibility between production and consumption points, providing flexibility in carrying capacity and selection of destination, allowing the break bulk cargo to be transported more easily and faster to some distances and being more economic for relatively short distances are only some of the reasons of preference.

The first vehicles to come to mind for road transportation are trucks with carrier bodies named trailers and semi-trailers and vehicles for passenger transportation. In view of the fact that such vehicles are used for commercial purposes, we project that these vehicles are constantly moving in traffic. Naturally, each vehicle in traffic increases the risk of traffic accidents. In today's vehicles, front bumpers and even the front section of the vehicles where drivers and passengers are located are designed to absorb shock. However, at this point, the most challenging part for even the vehicles with highest safety levels is no doubt encountered in the accidents where trucks with trailers and semi-trailers and similar vehicles with high-tonnage that carry passengers and goods are involved in rear-end collisions. The reason is that; since the front end of the vehicle which would absorb the shock goes under the body of a truck, windshield, the least safe part of the vehicle, hits the body of the truck before reaching the rear bumper. Passengers in front seats are also exposed to danger of hitting the body. If the velocity of the hitting vehicle is high enough, the passengers in the front seats are exposed to danger of death when the front end of the vehicle is crushed in order to hit the bumper of the truck and absorb the shock. This poses a danger not only for small vehicles such as automobiles but also big vehicles such as buses without long front parts. As the body of the truck is higher, with such vehicles, instead of the front bumper of the vehicle which would absorb the shock, the body of truck hits the windshield of such vehicles before the bumper and front part of the vehicle reaches the truck. Likewise, the driver as well as passengers in front hit the rear of the truck with full force of the impact. Trucks are vehicles that carry heavy loads and thus move slower than other vehicles. This increases the probability of accidents happening as the automobiles or other vehicles hit the rear of trucks with high velocity. In view of all these factors, bumpers which are capable of absorbing the shock and force of impact should be added to the rear end of hauling and transportation vehicles in order to ensure that such accidents cause minimum damage to human lives. The preferred material for shock absorbing bumpers is aluminum based, aluminum foams as they are best in absorbing the force and energy of the impact. Therefore, vehicles do not go under trucks in case of collision. This ensures that the passengers and vehicles make through an accident with minimum damage.

In the current technique, aluminum foam used for shock absorbing is encountered as a rarefied material with pores. In order for the material to be an effective absorber when used as material damping equipment, pressure surfaces must be parallel. In case of un-parallel compressions, there are breakages in the aluminum foam that cause the force to be diffracted towards the unbalanced side. As soon as this diffraction starts, aluminum material becomes unable to perform the required absorption and breaks off from the structure. It is unavoidable for the third surface to break down when two surfaces of the triangle shaped structure, the most preferred and known structure, is compressed.

Another problem is rapid damping of the material close to the joint areas with triangle structure due to exposure to extreme force, then acting as solid and being unable to perform the absorption when needed. In addition, the aluminum material used with existing technique is mounted on bumper with bolts. Bolt connection and aluminum material connection cannot be made as required due to difference in attributes of materials (aluminum-steel) and during absorption, the bolts are unable to provide necessary connection and break away from the material. Finally, the aluminum foam cannot compress enough due to the aforementioned reasons and cannot absorb the energy at the desired level. The more a material for mechanical absorption compresses, the more the damping action lasts and when the absorption is more effective, colliding and collided vehicles suffer less force of impact.

In the patent research conducted in relation with the technique, an application numbered TR2014/07685 (=WO2016/003377) belonging to the inventor company has been found. It discloses a shock absorbing bumper according to the preamble of claim 1. The summary of this application is as follows: The invention is about a bumper with damping action which is located between the bumper and vehicle chassis and absorbs the impact to reduce the inertial force on the drivers and passengers in colliding vehicles in case of an accident where vehicles used for transportation of goods such as trailers, semi-trailers and trucks are hit while in motion or stationary, and thus reducing the probability of injuries. Bumper system with damping action to be used in trailers, semi-trailers and trucks consists of vehicle platform, joint system, removable energy absorbing system and connection elements.

The documents encountered during the studies/researches do not provide any improvements towards the solution of problems mentioned in the current technique.

### Purpose of the Invention

The invention is about a shock absorbing bumper that fulfills all the aforementioned requirements, eliminates all disadvantages and provides some additional benefits.

The main purpose of the invention is to minimize damage to the passengers and vehicles by ensuring that force of impact during an accident is absorbed in the most efficient manner by making the pressure surfaces of the damping element assembly parallel.

The purpose of the invention is to ensure that shock is absorbed at the desired level by preventing break-down of the damping element during accident through use of coating elements.

The priority purpose of the invention is to provide damping at higher rates by increasing movement range of the shock absorbing bumper through suitable connection angle and parallelism.

Another purpose of the invention is to prevent shifting or breaking-off of damping element assembly on connection points due to force of impact in case of an accident, by using a connector slot.

Another purpose of the invention is to prevent diffraction of the surfaces which cannot be balanced in case of an accident, by producing damping elements with most appropriate shapes.

Another purpose of the invention is to minimize the repair, maintenance and replacement costs and provide economic benefits by ensuring that only damping element assembly is damaged after an accident.

The purpose of the invention is to prevent life threatening problems of the passengers after an accident and to protect human life.

The current invention, with all the advantages mentioned above and those to be understood with detailed description below, is a shock absorbing bumper which ensures that the force of impact is absorbed through a damping element upon contact with front part in case of rear-end collisions with transportation vehicles that carry goods or passengers, and it contains;
- a coating element that covers the surface of the damping element in order to prevent diffraction of the said damping element due to force of impact at the moment of accident,
- at least one connector slot where the damping element assembly consisting of damping element and coating element is placed and which acts as a retainer to prevent the said assembly to be dislocated due to force of impact during an accident,
- a connection rod which is in contact with the said connection slot, transfers the force received upon impact to the said damping element assembly, connects the said front part to the vehicle frame and positions the front part in the desired angle in order for the shock of impact to be absorbed.

Structural properties, characteristics and all advantages of the invention will be understood more clearly with the figures provided below and detailed explanations referencing these figures. Therefore, the evaluation must be conducted in view of these figures and detailed description.

### Figures to Help Understand the Invention

Figure 1: Complete general side-perspective view of the shock absorbing bumper that is subject to the invention.
Figure 2: General close perspective view of the shock absorbing bumper that is subject to the invention.
Figure 3: Close individual perspective view of the damping element assembly.
Figure 4: General perspective view of the shock absorbing bumper that is subject to the invention as mounted on vehicle frame.

### Part Numbers

10: Shock absorbing bumper
   10.1: Damping element assembly
      10.1.1: Coating element
      10.1.2: Damping element
   10.2: Connection slot
   10.3: Connection rod
   10.4: Front part
20: Vehicle frame

### Detailed Description of the Invention

In this detailed description, preferred structures of the shock absorbing bumper (10) that is subject to the invention has been described only to better clarify the subject without placing any restrictions.

The invention is about a newly-developed shock absorbing bumper (10) that absorbs the energy and force of the shock caused by an impact on the rear end of a vehicle when transportation and passenger vehicles are in motion or stationary, and aims to ensure that passengers and the vehicle pull through an accident with minimum damage.

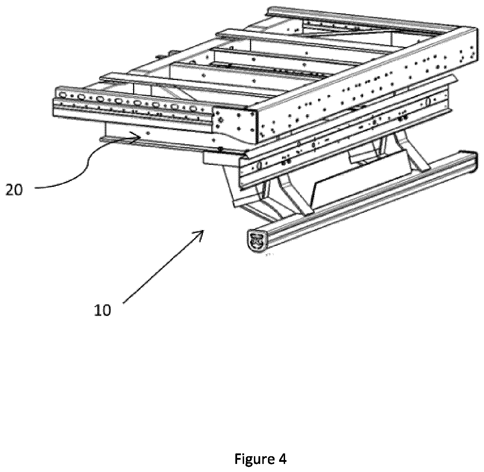

There are carrier bodies called as trailers and semi-trailers and used especially to carry loads in vehicles that transport cargo and passengers especially. The carrier bodies are seated on vehicle frame (20) and must protrude behind the vehicle as they are longer than vehicle frames (20). This causes a gap between the vehicle frame (20) and carrier body, and when vehicles in motion in traffic hit the carrier vehicle behind, they enter this gap and significant damages occur in both passengers and vehicles. In order to prevent this, a shock absorbing bumper (10) which both fills the gap behind the carrier vehicles and reduces the effects of force of impact is used at the rear part of carrier vehicles. In Figure 4, general perspective view of the shock absorbing bumper (10) that is subject to the invention as mounted on vehicle frame (20) is presented.

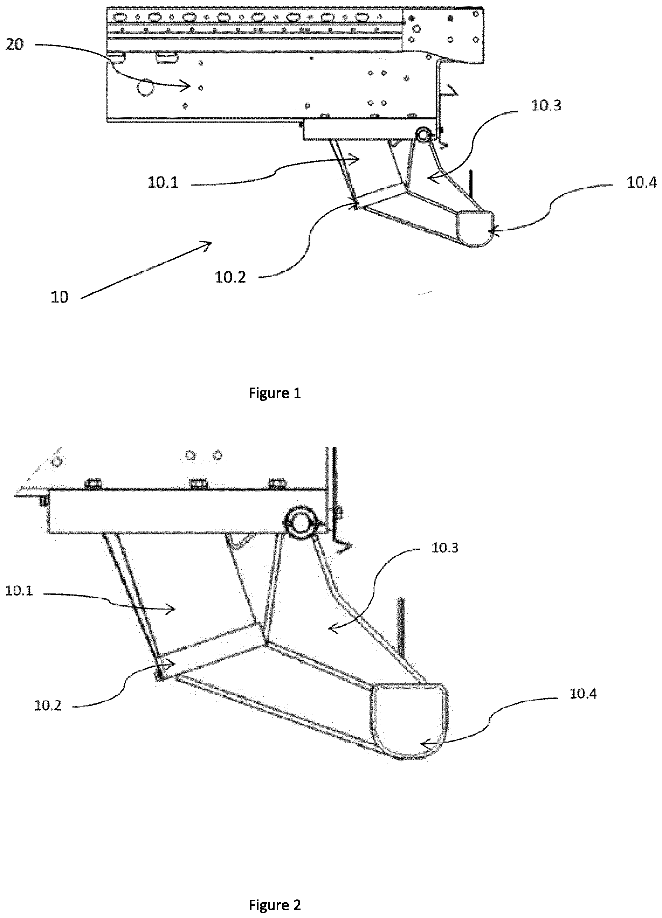

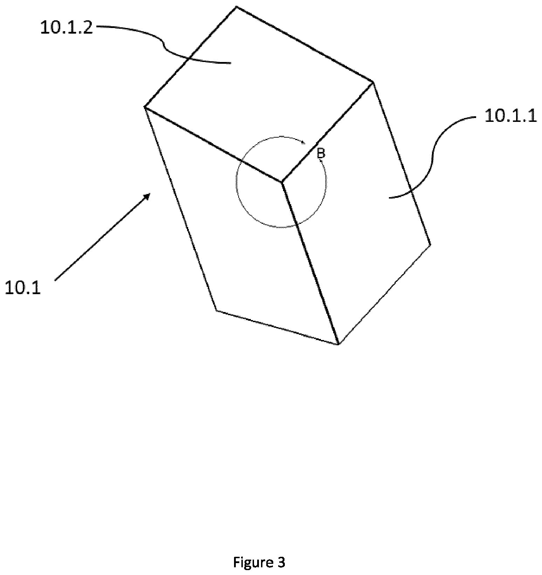

In Figure 1 and Figure 2, perspective general view of both complete and zoomed in versions of shock absorbing bumper (10) can be found. The first element to face the force of impact generated upon an accident is the front part (10.4). There is a connection rod (10.3) which connects the said front part (10.4) to vehicle frame (20) and positions the front part (10.4) in desired angle in order for the impact to be absorbed in the most efficient manner. After the front part (10.4) first faces the force of impact, the force is transferred to the actual damping element, in other words, damping element assembly (10.1). The said damping element assembly (10.1) is preferably made from aluminum foam, polyurethane based foam or composite materials as they can best absorb and damp the impact. In addition, to prevent surface shifts due to geometrical disadvantages with the force of impact as present in the existing technique and to seat on the connector slot (10.2) as intended, the damping element assembly (10.1) preferably includes a rectangle prism design. In the said damping element assembly (10.1), there is a coating element (10.1.1) covering the surface of the damping element (10.1.2) which prevents the assembly from being diffracted due to force of impact upon an accident and thus ensures that the shock is absorbed efficiently. Thus, the damping element (10.1.2) would neither break from its internal structure upon impact, nor shift on surfaces while performing damping action most efficiently. In Figure 3, there is the individual perspective view of the closed in version of the mentioned damping element assembly (10.1).

In the said invention, the connection of damping element assembly (10.1) to the shock absorbing bumper (10) is achieved with 2 connection slots (10.2) covering upper and lower surfaces (pressure surfaces). The connection slots (10.2) prevent the damping element assembly (10.1) from shifting from its fixed position as the pressure surfaces are constantly angled during damping action. In addition, as it holds the damping element assembly (10.1) from beneath and above, it ensures that breakage starts from the center and proceeds towards upper and lower surfaces when damping is started. Such absorption of damping element assembly (10.1) provides a smoother and more coordinated damping effect. The said connection slot (10.2) can be seen In Figure 1 and Figure 2.

It is due to parallelism of pressure surfaces of damping element assembly (10.1) that the shock absorbing bumper (10) can carry out the damping most efficiently. With the said invention, a design that is close to parallel is presented. By taking into account the sizes at the area of shock absorbing bumper (10), a proper connection angle which would provide maximum damping action has been determined. This angle is +17 degrees at the start of damping action, proceeds to 0 degree as damping continues and exceeds this value in the later stages. The said damping element assembly (10.1), before and after impact, makes swings at positive and negative directions to y-axis at equal angles. Thus, average of initial and final angles of upper and lower surfaces of damping element assembly (10.1) is 0 degree. The moment when the angle is 0 degree is the moment when pressure surfaces (upper and lower surfaces) of the damping element assembly (10.1) are parallel. In conclusion, the mechanism measurements calculated ensures that the damping element assembly (10.1) works in parallel in average.

This solution also increases the movement range of the shock absorbing bumper and is able to generate damping energy at higher rates.

Connection types between the elements constituting the said shock absorbing bumper (10) are as follows:
- Coating element (10.1.1) is mounted on damping element (10.1.2) through the use of mechanical connection, adhesives or welding.
- The front part (10.4) is mounted on connection rod (10.3) through the use of removable connection or mechanical connection, adhesives or welding.
- The connection slot (10.2) is mounted on assembly consisting of front part (10.4) and connection rod (10.3) through the use of removable connection or mechanical connection, adhesives or welding.
- Damping element assembly (10.1) is mounted between vehicle frame (20) and the assembly consisting of connection slot (10.2), front part (10.4) and connection rod (10.3) through removable connection.

## Claims

1. A shock absorbing bumper (10) which ensures that the force of impact is absorbed with a damping element (10.1.2) upon contact to a front part (1.4) in case of rear-end collisions with transportation vehicles that carry goods or passengers, containing:
• at least one connector slot (10.2) where a damping element assembly (10.1) is placed and which acts as a retainer to prevent said assembly to be dislocated due to force of impact during an accident,
• a connection rod (10.3) which is in contact with said connection slot (10.2), transfers the force received upon impact to said damping element assembly (10.1), connects said front part (10.4) to the vehicle frame (20) and positions the front part (10.4) in the desired angle in order for the shock of impact to be absorbed,
**characterized in that**
the damping element assembly (10.1) consists of the damping element (10.1.2) and a coating element (10.1.1) that covers the surface of the damping element (10.1.2) in order to prevent diffraction of said damping element (10.1.2) due to force of impact at the moment of accident.

2. The shock absorbing bumper (10) in accordance with the Claim 1; wherein the damping element assembly (10.1) has a geometry that the average of angle of upper and lower surfaces of the mentioned damping element assembly (10.1) to each other is 0 degree due to the swings by the mentioned damping element assembly (10.1) with equal angles and at positive and negative directions to y-axis before and after the impact.

3. The shock absorbing bumper (10) in accordance with the Claim 1; wherein the mentioned damping element (10.1.2) is made of aluminum foam or polyurethane based foam spring or composite materials.

4. The shock absorbing bumper (10) in accordance with the Claim 1; wherein it contains a coating element (10.1.1) mounted on the mentioned damping element (10.1.2) with mechanical connection or adhesives or welding.

5. The shock absorbing bumper (10) according to the Claim 1; wherein the front part (10.4) is mounted on the mentioned connection rod (10.3) with removable connection or mechanical connection or adhesives or welding.

6. The shock absorbing bumper (10) according to the Claim 1; wherein the connection slot (10.2) is mounted on the assembly composed of the mentioned front part (10.4) and connection rod (10.3), with removable connection or mechanical connection or adhesives or welding.

## Patentansprüche

1. Eine stoßdämpfende Stoßstange (10), die für die Aufprallkraft sorgt
wird bei Kontakt mit einem vorderen Teil (1.4) im Falle eines hinteren Endes mit einem Dämpfungselement (10.1.2) absorbiert
Kollisionen mit Transportfahrzeugen, die Güter oder Passagiere befördern, mit
•
• mindestens einen Verbinderschlitz (10.2), an dem eine Dämpfungselementanordnung (10.1) angeordnet ist
wirkt als Rückhalteeinrichtung, um zu verhindern, dass die Anordnung aufgrund von Aufprallkräften während eines Unfalls versetzt wird,
• eine Verbindungsstange (10.3), die in Kontakt mit dem Verbindungsschlitz (10.2) steht, überträgt
die Kraft, die beim Auftreffen auf die Dämpfungselementanordnung (10.1) erhalten wird, verbindet der vordere Teil (10.4) an dem Fahrzeugrahmen (20) und positioniert den vorderen Teil (10.4) in der gewünschte Winkel, damit der Stoß des Aufpralls absorbiert werden kann, **dadurch gekennzeichnet, dass**
die Dämpfungselementanordnung (10.1) besteht aus dem Dämpfungselement (10.1.2) und einem die Oberfläche des Dämpfungselements (10.1.2) überdeckenden Beschichtungselement (10.1.1), um eine Beugung des Dämpfungselements (10.1.2) zu verhindern .2) aufgrund der Kraft des Aufpralls im Moment des Unfalls.

2. Stoßdämpfender Stoßdämpfer (10) gemäß Anspruch 1; worin
die Dämpfungselementanordnung (10.1) weist eine Geometrie auf, dass der Mittelwert der Winkel von Ober- und Unterseiten der erwähnten Dämpfungselementanordnung (10.1) zueinander 0 Grad beträgt, aufgrund der Schwingungen der erwähnten Dämpfungselementanordnung (10.1) mit gleich Winkel und in positiver und negativer Richtung zur y-Achse vor und nach dem Aufprall.

3. Stoßdämpfender Stoßdämpfer (10) gemäß Anspruch 1; worin
das erwähnte Dämpfungselement (10.1.2) besteht aus Schaum- oder Verbundwerkstoffen auf Aluminiumschaum- oder Polyurethanbasis.

4. Stoßdämpfender Stoßdämpfer (10) gemäß dem Anspruch 1; worin
es enthält ein Beschichtungselement (10.1.1), das auf dem erwähnten Dämpfungselement (10.1.2) mit mechanischer Verbindung oder Klebern oder Schweißen befestigt ist.

5. Stoßdämpfender Stoßdämpfer (10) nach Anspruch 1;
wobei der vordere Teil (10.4) an der erwähnten Verbindungsstange (10.3) mit entfernbarer Verbindung oder mechanischer Verbindung oder Klebstoffen oder Schweißen befestigt ist.

6. Stoßdämpfender Stoßdämpfer (10) nach Anspruch 1; wobei der Verbindungsschlitz (10.2) an der Anordnung angebracht ist, die aus der erwähnten Vorderseite besteht
Teil (10.4) und Verbindungsstange (10.3), mit lösbarer Verbindung oder mechanischer Verbindung oder Klebstoffen oder Schweißen.

## Revendications

1. Un pare-chocs amortisseur (10) qui absorbe la force d'impact avec un élément amortisseur (10.1.2) lors du contact avec une partie avant (1.4) en cas de collision arrière avec des véhicules de transport transportant des marchandises ou des passagers, contenant :
•
• au moins une fente de connexion (10.2) dans laquelle un élément amortisseur (10.1) est placé et qui sert de dispositif de retenue pour empêcher que ledit ensemble ne soit déplacé en raison de la force d'impact lors d'un accident,
• une tige de connexion (10.3) qui est en contact avec ladite fente de connexion (10.2) et qui transfère la force reçue lors de l'impact sur ledit ensemble d'élément amortisseur (10.1), relie ladite partie avant (10.4) au châssis de véhicule (20) et positionne la partie avant (10.4) dans l'angle souhaité pour que le choc d'impact soit absorbé,
**caractérisé en ce que**
l'ensemble élément amortisseur (10.1) est constitué de l'élément amortisseur (10.1.2) et d'un élément de revêtement (10.1.1) qui recouvre la surface de l'élément amortisseur (10.1.2) afin d'éviter la diffraction dudit élément amortisseur (10.1.2) en raison de la force de l'impact au moment de l'accident.

2. Le pare-chocs amortisseur (10) selon la revendication 1 dans lequel
l'ensemble d'élément amortisseur (10.1) présente une géométrie telle que l'angle moyen des surfaces supérieure et inférieure de l'ensemble élément amortisseur mentionné (10.1) est de 0 degré en raison des oscillations de l'ensemble élément amortisseur mentionné (10.1) avec des angles égaux et directions positive et négative vers l'axe des y avant et après l'impact.

3. Le pare-chocs amortisseur (10) selon la revendication 1 dans lequel
l'élément amortisseur mentionné (10.1.2) est en mousse d'aluminium ou en mousse à base de polyuréthane ou en matériaux composites.

4. Le pare-chocs amortisseur (10) selon la revendication 1 dans lequel
il contient un élément de revêtement (10.1.1) monté sur l'élément amortisseur mentionné (10.1.2) avec liaison mécanique ou adhésifs ou soudage.

5. Le pare-chocs amortisseur (10) selon la revendication 1
dans lequel la partie avant (10.4) est montée sur la tige de connexion mentionnée (10.3) par connexion amovible ou connexion mécanique ou des adhésifs ou soudage.

6. Le pare-chocs amortisseur (10) selon la revendication 1 dans lequel la fente de connexion (10.2) est montée sur l'ensemble composé de la partie avant mentionnée (10.4) et de la tige de connexion (10.3) par connexion amovible ou connexion mécanique ou des adhésifs ou soudage.
